# EUROPEAN PATENT APPLICATION

(11) **EP 3 087 878 A1**
(43) Date of publication of application: **02.11.2016**
(21) Application number: 14874054.1
(22) Date of filing: 24.12.2014
(51) Int. Cl.: A47J 27/00, A47J 36/02, B65D 81/34, H05B 6/12

(54) **HEAT-GENERATING SHEET FOR INDUCTION COOKER, AND HEAT-COOKING SET FOR INDUCTION COOKER**

(30) Priority: 27.12.2013 JP 2013271247; 18.04.2014 JP 2014086539
(71) Applicant: Toyo Seikan Group Holdings, Ltd., Shinagawa-ku Tokyo 141-8627 (JP)
(72) Inventor: FUJITA, Hagino, Tokyo 141-8627 (JP); SAITOU, Mitsuyoshi, Tokyo 141-8627 (JP); ASANO, Hotaka, Tokyo 130-8644 (JP); OGURA, Ai, Tokyo 130-8644 (JP)
(74) Representative: Raynor, Stuart Andrew
(86) International application number: PCT/JP2014/084040
(87) International publication number: WO 2015/098910

(57) **Abstract**

A heat-generating sheet 1 for IH cooking heaters according to the present invention is composed of a laminate sheet comprising a conductive layer 3 and a dielectric layer 5, wherein the laminate sheet has a bottom section 10 and a peripheral side wall section 13 and can be folded into the shape of a container A having the conductive layer 3 on the inner side, a plurality of first cutlines 7 extending in the height direction of the container A are formed at intervals in the peripheral direction in the conductive layer 3 corresponding to the peripheral side wall section 13 of the container A formed by folding and reduce or cut off the induction of an eddy current produced by the induction heating of an IH cooking heater, and a reinforcing ring 20 made of a dielectric material is fixed to the dielectric layer 5 corresponding to the periphery of the bottom section of the container A and keeps the shape of the container A.

## Description

### TECHNICAL FIELD

The present invention relates to a heat-generating sheet for IH cooking heaters which is used for heat-cooking with an IH cooking heater and discarded after heat-cooking and to a heat-cooking set for IH cooking heaters which includes the heat-generating sheet.

### BACKGROUND ART

Cookers called "electromagnetic cookers" are now widespread in place of gas cookers. The electromagnetic cookers are also called "IH cooking heaters" and generate a high-frequency magnetic field with an electromagnetic induction heating coil installed therein to heat ingredients or water contained in a cooking container mounted on the cookers with Joule heat generated by an induced eddy current.

Since the electromagnetic cookers can perform heat-cooking without using a flame, they are very safe and clean, facilitate the wiping-off of dirt and are also more excellent in economic efficiency than conventional cookers.

By the way, the electromagnetic cookers have a disadvantage that cooking utensils able to be used therewith are limited and exclusive utensils made of a magnetic material typified by iron must be used.

Therefore, in recent years, a large number of cooking utensils and cooking containers made of a material other than magnetic materials have been proposed and implemented. For example, Patent Documents 1 and 2 disclose an IH cooking heater in which a heat-generating sheet composed of metal foil such as aluminum foil is attached to a plastic container.

The above cooker is advantageously used to cook water or various ingredients contained in a container. However, since the heat-generating sheet is bonded and fixed to the bottom section of the container by heat-sealing, this heat-generating sheet is not suitable for use as a disposable heat-generating sheet which is exchanged with a new one for each time of heat-cooking.

That is, as the heat-generating sheet formed on the bottom section of the container is extremely inexpensive, it is desired that this heat-generating sheet should be disposable. However, a functional section such as a fuse is formed on the sheet to prevent excessive heat generated by induction heating at the time of operating an IH cooking heater and the damage of the plastic container. When the heat-generating sheet is simply mounted on the bottom section of the plastic container, it is not fixed firmly and moves during heat-cooking (boiling). Therefore, it is necessary to bond and fix the heat-generating sheet to the bottom section of the container. Further, since the formation of the above functional section such as a fuse and the step of bonding and fixing the heat-generating sheet to the bottom section of the plastic container are required, it is difficult to produce the heat-generating sheet at a low cost.

Therefore, it is desired to further reduce the cost of the above cooker by using a disposable heat-generating sheet.

### PRIOR ART DOCUMENTS

### Patent Documents

Patent Document 1: JP-A 2009-285184
Patent Document 2: WO2012/132284

### DISCLOSURE OF THE INVENTION

### [Problem to Be Solved by the Invention]

It is therefore an object of the present invention to provide a disposable heat-generating sheet for IH cooking heaters which is discarded after heat-cooking.

It is another object of the present invention to provide a heat-cooking set for IH cooking heaters which includes the heat-generating sheet.

### [Means for Solving the Problem]

According to the present invention, there is provided a heat-generating sheet for IH cooking heaters which is composed of a laminate sheet including a conductive layer and a dielectric layer, wherein
the laminate sheet has a bottom section and a peripheral side wall section and can be folded into a shape of a container having the conductive layer on an inner side, a plurality of first cutlines extending in a height direction of the container are formed at intervals in the peripheral direction in the conductive layer corresponding to the peripheral side wall section of the container formed by folding the laminate sheet and reduce or cut off the induction of an eddy current produced by the induction heating of an IH cooking heater, and a reinforcing ring made of a dielectric material is fixed to the dielectric layer corresponding to the periphery of the bottom section of the container formed by folding the laminate sheet and keeps the shape of the container

In the heat-generating sheet for IH cooking heaters of the present invention, preferably,
(1) grooves are formed in the reinforcing ring on a side facing the dielectric layer at positions intersecting the first cutlines,
(2) a plurality of endless second cutlines are formed concentric to the center of the bottom section in the dielectric layer corresponding to the bottom section of the container formed by folding the laminate sheet, the first cutlines are formed up to the position of a second cutline having the maximum diameter, and the first and second cutlines divide the induction of an eddy current produced by the induction heating of an IH cooking heater, and
(3) third cutlines which reduce or cut off the induction of an eddy current produced by the induction heating of an IH cooking heater are formed up to the position of a second cutline having the minimum diameter in an area surrounded by this second cutline out of the plurality of second cutlines.

According to the present invention, there is provided a heat-cooking set for IH cooking heaters, including the above heat-generating sheet for IH cooking heaters and a dielectric holding member for holding a container formed from the heat-generating sheet, wherein
the holding member has an annular wall and a peripheral flange projecting inward from the lower end of the annular wall, and the container formed from the heat-generating sheet is stored and held in the inside of the annular wall.

In the above heat-cooking set for IH cooking heaters, preferably,
(1) the diameter of the annular wall of the holding member becomes smaller toward the lower end where the flange is formed, and a peripheral stepped section projecting inward is formed on the inner surface of the annular wall,
(2) a grip is formed at the upper end of the annular wall, and
(3) the heat-cooking set further comprises a dielectric lid.

In general, the used heat-generating sheet of the above cheat-cooking set for IH cooking heaters is discarded after cooking with an IH cooking heater and exchanged with a new one for the next cooking with the IH cooking heater.

### [Effect of the Invention]

The heat-generating sheet for IH cooking heaters of the present invention is used in combination with a predetermined dielectric holding member by folding the sheet into the shape of a container. Since the formation of a functional section such as a fuse for preventing excessive heating or the bonding and fixing of the heat-generating sheet to the bottom section of a plastic container is not required, the heat-generating sheet is advantageously used as an inexpensive disposable heat-generating sheet. The heat-cooking set for IH cooking heaters including the above heat-generating sheet and the dielectric holding member eliminates the need of bonding and fixing the heat-generating sheet to the holding member after the heat-generating sheet is placed on the holding member. After heat-cooking, this inexpensive heat-generating sheet is discarded and a new heat-generating sheet may be used for the next heat-cooking, thereby making possible the bulk sales and purchase of the extremely inexpensive heat-generating sheets.

Further, after heat-cooking, the heat-generating sheet is discarded, the remaining holding member is cleaned, and its cleaning is very easy because it is not in contact with water or ingredients.

### BRIEF DESCRIPTION OF THE DRAWINGS

Fig. 1 is a reference sectional view for explaining the multi-layer structure of the heat-generating sheet of the present invention;
Fig. 2 is a plan view of the heat-generating sheet of the present invention;
Fig. 3 is a bottom view of the heat-generating sheet of the present invention;
Fig. 4 is a half perspective view of a holding member for mounting the heat-generating sheet of the present invention;
Figs. 5 (a) and 5 (b) are schematic sectional views showing the procedure of mounting the heat-generating sheet of the present invention on the holding member;
Fig. 6 is a half perspective view showing that the heat-generating sheet of the present invention is mounted on the holding member;
Fig. 7 is a perspective view showing heat-cooking by mounting the heat-generating sheet of the present invention on the holding member; and

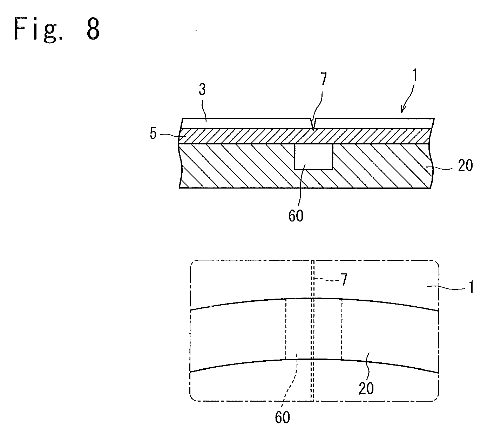

Figs. 8 are partially enlarged views of a preferred example of the heat-generating sheet of the present invention, wherein Fig. 8 (a) is a reference sectional view thereof and Fig. 8(b) is a partial bottom view thereof.

### BEST MODE FOR CARRYING OUT THE INVENTION

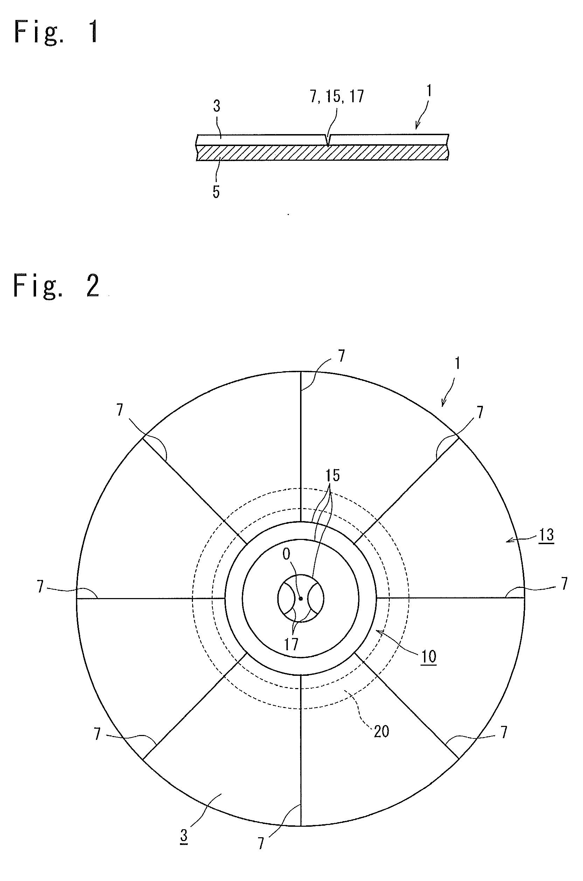

As shown in Figs. 1 to 3, the heat-generating sheet 1 for IH cooking heaters of the present invention is composed of a laminate sheet comprising a conductive layer 3 formed on the front side and an dielectric layer 5 formed on the rear side.

The conductive layer 3 generates heat with an eddy current induced by a high-frequency magnetic field when it is placed on the induction heating section of an IH cooking heater and formed from metal foil typified by aluminum foil.

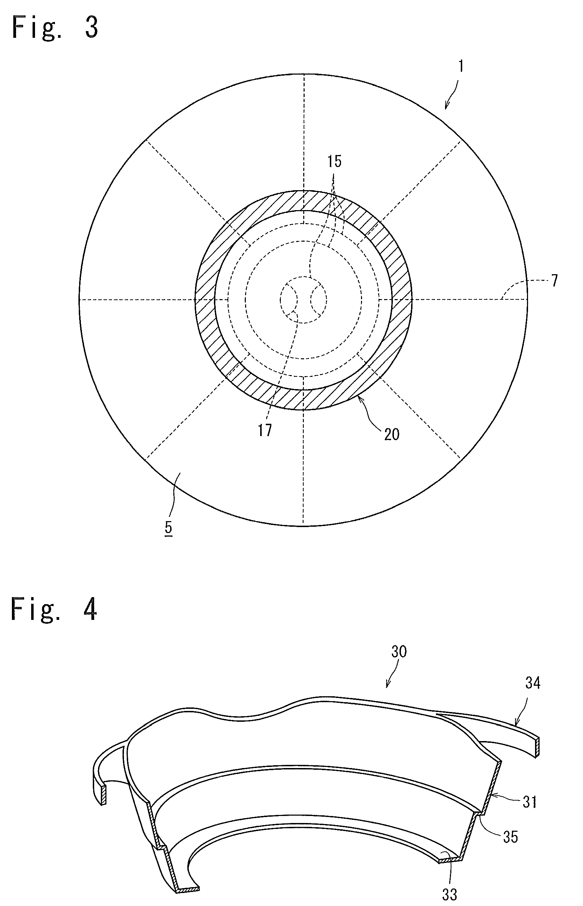

This heat-generating sheet 1 is folded into the shape of a container and placed on the induction heating section of an IH cooking heater while it is mounted on a dielectric holding member 30 as shown in Figs. 4 to 6. The heat-generating sheet 1 is folded to keep the shape of a container stably, and the dielectric layer 5 of the heat-generating sheet 1 is formed to prevent direct contact between the conductive layer 3 and the IH cooking heater so as to make generated heat appropriate. Although the dielectric layer 5 is not particularly limited if it is made of a nonconductive material exemplified by resins such as thermoplastic resins and thermosetting resins, ceramics and paper materials, resins, particularly thermoplastic resins are generally used as a nonconductive material for forming the heat-generating sheet 1 from the viewpoints of moldability, cost and lightweight.

The thermoplastic resins include olefin-based resins such as low-density polyethylene, high-density polyethylene, polypropylene, poly1-butene, poly4-methyl-1-pentene, α-olefin homopolymers and cyclic olefin copolymers; ethylene· vinyl-based copolymer resins such as ethylene·vinyl acetate copolymer, ethylene·vinyl alcohol copolymer and ethylene·vinyl chloride copolymer; styrene-based resins such as polystyrene, acrylonitrile·styrene copolymer, ABS and α-methylstyrene· styrene copolymer; vinyl-based resins such as polyvinyl chloride, polyvinylidene chloride, vinyl chloride·vinylidene chloride copolymer, methyl polyacrylate and methyl polymethacrylate; amide resins such as nylon 6, nylon 6-6, nylon 6-10, nylon 11 and nylon 12; polyester resins such as polyethylene terephthalate (PET), polybutylene terephthalate and polyethylene naphthalate (PEN); polycarbonate resins; polyphenylene oxide; polyimide resins; polyamide-imide resins; polyether imide resins; fluorine resin; allyl resins; polyurethane resins; cellulose resins; polysulfone resins; polyether sulfone resins; ketone resins; and amino resins. Further, blends of these resins, modified products obtained by copolymerizing these resins and resins having a multi-layer structure may also be used.

Polyester resins such as PET and PEN, olefin-based resins such as polypropylene, polycarbonate resins and polyimide resins are particularly preferred.

In general, the above dielectric layer 5 should have a thickness of 5 to 80 µm though this differs according to the size of the heat-generating sheet 1.

Cutlines 7, 15 and 17 of various shapes for adjusting an eddy current induced by induction heating caused by the operation of an IH cooking heater are formed in the conductive layer 3 of the heat-generating sheet 1. That is, these cutlines divide the conductive layer 3 completely and are formed linear by known means such as laser machining so that the dielectric layer 5 is left behind (see Fig. 1), whereby an eddy current induced in the conducive layer 3 is completely divided.

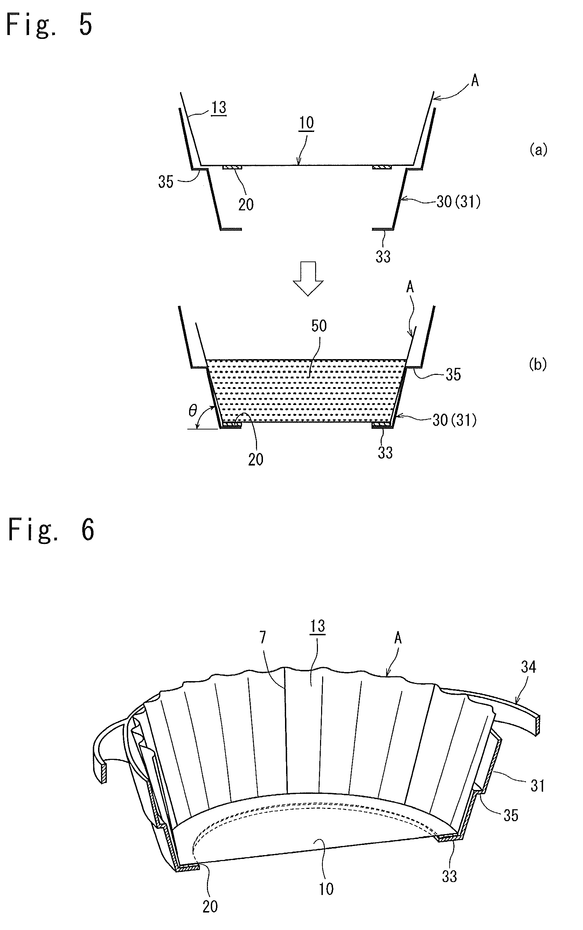

This heat-generating sheet 1 is generally circular as a whole and can be folded to form a container having a bottom section 10 and a peripheral side wall section 13 with the conductive layer 3 on the inner side thereof (see Fig. 5 and Fig. 6). That is, the size of the container thus formed is about the same as the size of a pot used for cooking at home.

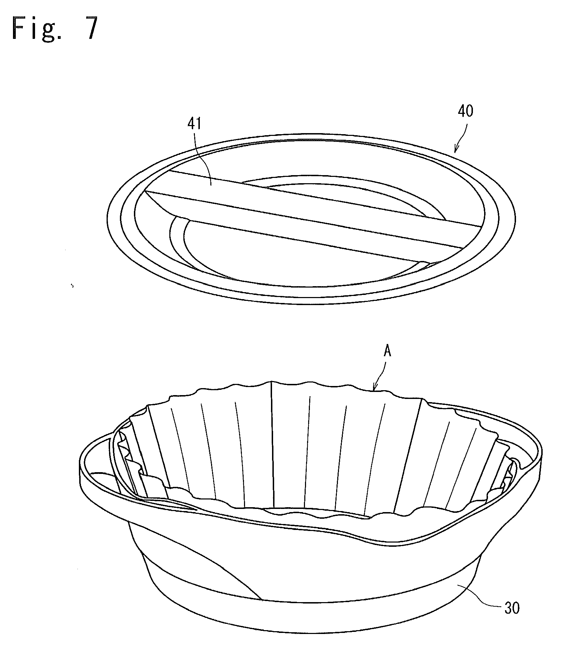

A large number of first cutlines 7 extending radially with the center O of the bottom section 10 as a starting point are formed at appropriate equal intervals in the peripheral side wall section 13 of the container formed by folding (see Fig. 2). The induction of an eddy current running through the peripheral side wall section 13 of the container formed by folding can be reduced or cut off by the first cutlines 7 so as to prevent the excessive heat generation of the peripheral side wall section 13, thereby making it possible to carry out heat-cooking (boiling) at an appropriate temperature and also to effectively prevent the damage of the dielectric layer 5 corresponding to the peripheral side wall section 13 and the dielectric holding member 30 in contact with the side wall section 13 by heating. When a container is formed, for example, by pleating a section corresponding to the peripheral side wall section 13 of the heat-generating sheet 1, surface contact between the side wall section 13 of the container and the holding member 30 is avoided, thereby making it possible to effectively prevent the damage of the holding member 30 by heating and to keep the stable shape of the container (see Fig. 6 and Fig. 7).

Although the number of the first cutlines 7 is not particularly limited, it is generally 2 or more, preferably 3 to 40, and the number of the cutlines 7 which can reduce or cut off the induction of an eddy current produced by induction heating is suitable selected according to the size of the container when the heat-generating sheet 1 is folded into the shape of the container for heating. Although the first cutlines 7 extend radially in the example shown in Fig. 2 and Fig. 3, they may be curved or formed in another shape as long as they can reduce or cut off the induction of an eddy current.

As shown in Fig. 2, it is preferred that a plurality of endless second cutlines 15 which are concentric to the center O of the bottom section should be formed in an area corresponding to the bottom section 10 of the formed container. That is, an eddy current running through the conductive layer 3 corresponding to the bottom section 10 of the container formed by folding is divided for each area by the endless cutlines 15, thereby preventing the excessive heat generation of the bottom section 10, which is effective for heat-cooking such as boiling at an appropriate temperature. The number of the endless second cutlines 15 is not particularly limited but generally a few.

As understood from Fig. 2 and Fig. 3, the above-described first cutlines 7 preferably extend up to the position of a cutline having the maximum diameter out of the second cutlines 15. Thereby, this can prevent the application of an eddy current induced in the bottom section 10 to the side wall section 13, thereby making it possible to prevent the excessive heat generation of the side wall section 13 surely.

Further, as shown in Fig. 2, third cutlines 17 extending up to the position of a second cutline 15 having the minimum diameter are formed in an area surrounded by the above cutline out of the above endless second cutlines 15. That is, the third cutlines 17 reduce or cut off an eddy current induced in the center part of the bottom section 10 so as to prevent bumping caused by the local heating of the center part of the bottom section 10 at the time of heat-cooking (boiling).

The third cutlines 17 should extend in a direction of reducing or cutting off the induced eddy current, that is, up to the position of the endless second cutline 15. For example, they are formed arcuate in Fig. 2 but may be formed linear like so-called "cross-cut", and the number of the third cutlines 17 is not limited.

In the above-described heat-generating sheet 1 of the present invention, as shown in Fig. 3, it is preferred that a reinforcing ring 20 should be formed in a part corresponding to the periphery of the bottom section 10 of the container formed by folding on the surface (that is, the rear surface of the heat-generating sheet 1) of the dielectric layer 5 formed on the rear side of the conductive layer 3. By forming this reinforcing ring 20, the shape of the container formed by folding the heat-generating sheet 1 can be kept stably.

As a matter of course, this reinforcing ring 20 is formed from a dielectric material, preferably the same material as the dielectric material of the dielectric layer 5 in order to be bonded and fixed firmly to the dielectric layer 5. Particularly when the dielectric layer 5 is formed from an olefin-based resin such as polypropylene, it is preferred that the reinforcing ring 20 should be formed from an olefin-based resin such as polypropylene and fixed to the predetermined part of the dielectric layer 5 by heat-sealing.

The thickness and width of the reinforcing ring 20 may be set to suitable ranges in order to keep the shape of the container formed by folding stably.

The above-described heat-generating sheet 1 is used in combination with the holding member 30 of a shape shown in Figs. 4 to 6.

In these figures, the container formed by folding the heat-generating sheet 1 is represented by A.

In the present invention, the above holding member 30 is also formed from a dielectric material like the above-described dielectric layer 5 and the reinforcing ring 20. The holding member 30 is formed from a thermoplastic resin, specifically an olefin-based resin, most preferably polypropylene from the viewpoint of moldability.

The holding member 30 has a tapered annular wall 31 whose diameter is the largest at the upper end and decreases toward the lower end, a peripheral flange 33 projecting inward is formed at the lower end of the annular wall 31, and a grip 34 is formed at the upper end of the annular wall 31.

While the container A formed from the heat-generating sheet 1 of the present invention is stored in the inside of the annular wall 31 of the above holding member 30 and kept stably in the holding member 30, it is subjected to heat-cooking with an IH cooking heater. The annular wall 31 is set to a size that enables the container A to be fit in the inside of the annular wall 31.

Preferably, a peripheral stepped section 35 projecting inward is formed on the inner surface of the above annular wall 31 at a suitable position, for example, at a center position in the height direction of the annular wall 31 or, not shown, an intermediate position between the center part and the upper end or the lower end.

That is, with reference to Fig. 5(a), although the container A formed by folding the heat-generating sheet 1 is inserted into the inside of the annular wall 31, when it is empty, the periphery of the bottom section 10 of the container A is caught by the above peripheral stepped section 35, whereby the container A is prevented from dropping to the bottom. Therefore, in this state, the bottom section 10 of the container A formed from the heat-generating sheet 1 does not generate heat as it is far from an IH cooking heater even when the holding member 30 holding the container A is placed on the induction heating section of the IH cooking heater with the result of the prevention of so-called "dry heating".

Then, when a material 50 to be heated such as water or ingredients to be cooked is injected into the container A in the state shown in Fig. 5(a), the container A drops from the stepped section 35 by its weight, the bottom section 10 is supported by the inner flange 33 of the holding member 30 (see Fig. 5(b) and Fig. 6), and the heat-cooking (boiling) of the material 50 to be heated is carried out by induction heating with the IH cooking heater in this state.

As shown in Fig. 5(b), the taper angle θ of the annular wall 31 below the stepped section 35 is 30° to 90°, preferably 60° to 80° in order to drop the container A containing the material 50 to be heated quickly. As understood from Fig. 5(a) and 5(b), the outer diameter of the reinforcing ring 20 formed on the bottom section 10 of the container A is preferably set slightly smaller than the diameter of the peripheral stepped section 35 in order to drop the container A containing the material 50 to be heated quickly.

A lid 40 is used in combination with the holding member 30 at the time of heat-cooking as shown in Fig. 7. As a matter of course, this lid 40 is formed from a dielectric material, particularly a thermoplastic resin, like the holding member 30.

The lid 40 is used as a pot lid at the time of heat-cooking the material 50 to be heated and also may be used as a pot mat by reversing it after heat-cooking. By using the lid 40 as a pot mat, the heat after heat-cooking of the bottom section 10 (heat-generating sheet 1) of the container A exposed to a space surrounded by the inner flange 33 of the holding member 30 can be blocked. At this point, the container A containing the material and the holding member 30 after heat-cooking can be placed stably by adopting constitution that the lid 40 can be installed in the space surrounded by the inner flange 33 of the holding member 30, or they can be carried stably by holding the lid 40. For example, when a center section 41 projecting downward when the lid 40 is reversed is installed in the space surrounded by the inner flange 33 of the holding member 30, the lid 40 is used as a pot mat.

In Fig. 6 and Fig. 7, the material 50 to be heated which has been injected into the container A is not shown.

As understood from the above explanation, the lower end of the annular wall 31 forming the holding member 30 is not closed by the bottom wall, and only the inner flange 33 for supporting the periphery of the bottom section 10 of the container A is formed. Therefore, most of the bottom section 10 of the container A which generates heat by the induction of an eddy current produced by induction heating with the IH cooking heater is not in contact with the holding member 30, and further, the induction of an eddy current is reduced or cut off to suppress the heat generation of the peripheral side wall section 1 of the container A by forming the first cutlines 7, whereby the side wall section of the holding member 30 does not become hot. Therefore, the thermal deformation of the holding member 30 by the heat generation of this container A (heat-generating sheet 1) is effectively avoided.

Since the reinforcing ring 20 is formed at the periphery of the bottom section 10 of the above container A, when the material 50 to be heated such as water to be boiled is injected into the container A, inconvenience that the container A is contracted by the weight of the material 50 to be heated is effectively avoided, thereby keeping the shape of the container A stably.

In the above-described invention, if the thickness of the reinforcing ring 20 and the thickness of the inner flange 33 are too large while the bottom section 10 of the container A is held by the inner flange 33 of the holding member 30, the distance between the conductive layer 3 of the bottom section 10 and the induction heating section of the IH cooking heater becomes too large, whereby an eddy current is not induced effectively, thereby making difficult satisfactory heat generation. Therefore, these thicknesses are set to ranges that enable the distance between the bottom section 10 of the container A and the induction heating section of the IH cooking heater to induce an eddy current for heat generation effectively.

An example in which the shape of the heat-generating sheet 1 of the present invention is circular has been described above. As long as the heat-generating sheet 1 can be folded into the shape of a container, the shape of the heat-generating sheet 1 may be rectangular, the shape of the endless second cutlines 15 formed in the bottom section 10 may be rectangular, and further the planar shape of the annular wall 31 of the holding member 30 may also be rectangular.

In place of the formation of the container A by folding the heat-generating sheet 1 onto the holding member 30, the container A may be produced by forming a folding line in the heat-generating sheet 1 so that the container A is stored in the inside of the annular wall 31 of the holding member 30. In this case, the heat-generating sheet 1 having a folded line or a laminate prepared by piling up a large number of heat-generating sheets 1 folded into the shape of the container A compactly may be marketed and purchased.

Further, grooves 60 are preferably formed in the reinforcing ring 20 on a side facing the dielectric layer 5 at positions intersecting the first cutlines 15.

That is, when a dielectric layer made of an olefin-based resin (such as polypropylene) is formed on a conductive sheet such as aluminum foil, the above-described cutlines 7, 15 and 17 are formed in the conductive layer 3 by laser machining, and the vacuum molded or injection molded reinforcing ring 20 is heat sealed to the dielectric layer 5 of the resulting laminate to produce the above-described heat-generating sheet 1, the dielectric layer 5 of the laminate remaining at positions where the first cutlines 7 have been formed is damaged.

Therefore, it is conceivable that the cutlines 7, 15 and 17 are formed in the conductive layer 3 by laser machining after the reinforcing ring 20 is heat sealed to the dielectric layer of the laminate. However, in this case, the first cutlines 7 formed in the side wall section 13 extend up to the position of a cutline having the maximum diameter out of the endless second cutlines 15 formed in a part corresponding to the bottom section 10 (see Fig. 2 and Fig. 3) as described above, whereby a conductor (for example, Al) forming the conductive layer 3 may vapor deposit on the reinforcing ring 20. This deposit exhibits a mold-like appearance and damages the commodity value of this heat-generating sheet 1.

In the heat-generating sheet of the present invention, the formation of this deposit can be effectively avoided by forming the above-described grooves 60 in the reinforcing ring 20. That is, the vapor of a conductor such as Al produced when the cutlines 7 are formed by laser machining permeates the dielectric layer 5 and the permeated vapor is dammed by the reinforcing ring 20 with the result that the above deposit adheres to the reinforcing ring 20. Therefore, by forming the grooves 60 in the reinforcing ring 20 on a side facing the dielectric layer 5 at positions intersecting the cutlines 7, the conductor vapor produced at the time of forming the cutlines 7 is not dammed by the reinforcing ring 20, flows swiftly and is discharged with the result that the formation of the deposit on the reinforcing ring 20 can be effectively avoided.

In the above-described present invention, the container A formed from the heat-generating sheet 1 is simply mounted on the holding member 30 and not bonded and fixed to the holding member 30 by heat-sealing. Therefore, this heat-generating sheet 1 is discarded after heat-cooking, and a container A is formed by using a new heat-generating sheet 1 for the next heat-cooking. That is, a set of this heat-generating sheet 1, the above-described holding member 30 and the lid 40 is marketed as a heat-cooking set for IH cooking heaters for cooking with an IH cooking heater. The heat-generating sheet 1 itself is discarded after heat-cooking and exchanged with a new one for each time of cooking. Further, since a large number of the heat-generating sheets 1 are piled up compactly to be marketed and purchased, they are suitable for easy sales.

### Explanation of reference symbols

- 1:: heat-generating sheet
- 3:: conductive layer
- 5:: dielectric layer
- 7:: radial cutline
- 10:: bottom section
- 13:: side wall section
- 15:: endless cutlines
- 17:: block cutlines
- 20:: reinforcing ring
- 30:: holding member
- 31:: annular wall
- 33:: inner flange
- 35:: peripheral stepped section
- A:: container

## Claims

1. A heat-generating sheet for IH cooking heaters which is composed of a laminate sheet including a conductive layer and a dielectric layer, wherein
the laminate sheet has a bottom section and a peripheral side wall section and can be folded into a shape of a container having the conductive layer on an inner side, a plurality of first cutlines extending in a height direction of the container are formed at intervals in the peripheral direction in the conductive layer corresponding to the peripheral side wall section of the container formed by folding the laminate sheet and reduce or cut off the induction of an eddy current produced by the induction heating of an IH cooking heater, and a reinforcing ring made of a dielectric material is fixed to the dielectric layer corresponding to the periphery of the bottom section of the container formed by folding the laminate sheet and keeps the shape of the container.

2. The heat-generating sheet for IH cooking heaters according to claim 1, wherein grooves are formed in the reinforcing ring on a side facing the dielectric layer at positions intersecting the first cutlines.

3. The heat-generating sheet for IH cooking heaters according to claim 1, wherein a plurality of endless second cutlines are formed concentric to a center of the bottom section in the dielectric layer corresponding to the bottom section of the container formed by folding the laminate sheet, the first cutlines are formed up to the position of a second cutline having the maximum diameter, and the first and second cutlines divide the induction of an eddy current produced by the induction heating of an IH cooking heater.

4. The heat-generating sheet for IH cooking heaters according to claim 3, wherein third cutlines which reduce or cut off the induction of an eddy current produced by the induction heating of the IH cooking heater are formed up to the position of a second cutline having the minimum diameter in an area surrounded by the second cutline out of the plurality of second cutlines.

5. A heat-cooking set for IH cooking heaters, including the heat-generating sheet for IH cooking heaters of claim 1 and a dielectric holding member for holding a container formed from the heat-generating sheet, wherein
the holding member has an annular wall and a peripheral flange projecting inward from the lower end of the annular wall, and the container formed from the heat-generating sheet is stored and held in the inside of the annular wall.

6. The heat-cooking set for IH cooking heaters according to claim 5, wherein the diameter of the annular wall of the holding member becomes smaller toward the lower end where the flange is formed, and a peripheral stepped section projecting inward is formed on the inner surface of the annular wall.

7. The heat-cooking set for IH cooking heaters according to claim 5, wherein a grip is formed at the upper end of the annular wall.

8. The heat-cooking set for IH cooking heaters according to claim 5 further including a dielectric lid.

9. The heat-cooking set for IH cooking heaters according to claim 5, wherein the heat-generating sheet used after cooking with an IH cooking heater is discarded and exchanged with a new heat-generating sheet for the next cooking with the IH cooking heater.
